# EUROPEAN PATENT SPECIFICATION

(11) **EP 1 772 296 B1**
(45) Date of publication and mention of the grant of the patent: **26.12.2012**
(21) Application number: 06076816.5
(22) Date of filing: 03.10.2006
(51) Int. Cl.: B60G 17/027, B60G 17/017, B60G 17/0185

(54) **Vehicle**
Fahrzeug
Véhicule

(30) Priority: 10.10.2005 NL 1030146
(43) Date of publication of application: 11.04.2007
(73) Proprietor: Transport Industry Development Centre B.V., 5692 GA Son en Breugel (NL)
(72) Inventor: Van Genugten, Antonius Jacobus, 5298 VK Liempde (NL)
(74) Representative: Dorna, Peter

(56) References cited:
- EP-A- 0 148 060
- EP-A- 1 333 189
- WO-A-03/051656
- GB-A- 2 003 255
- GB-A- 2 191 741
- GB-A- 2 346 592
- US-A- 5 950 996
- PATENT ABSTRACTS OF JAPAN vol. 016, no. 235 (M-1257), 29 May 1992 (1992-05-29) -& JP 04 050007 A (MAZDA MOTOR CORP), 19 February 1992 (1992-02-19)

## Description

The present invention relates to a vehicle according to the preamble of claim 1.

Such a vehicle is known from European patent application EP-A2-1 333 189. For certain applications the vehicle must be able to "kneel", as it were, in order to pick up cargo. An example of such a vehicle is a so-called "inner loader". To make this possible, the vehicle must be able to lower itself to a position lower than the position it would reach upon normal (maximum) compression of the vehicle's suspension during normal transport. To enable the vehicle to lower itself to such a degree, it is known to use a spring bellows having a relatively great stroke length in the wheel suspension, which stroke length is in itself greater than the length required only for compression and extension of the vehicle's suspension during transport. To obtain such a great stroke length, it is necessary to use relatively long air bellows. It has become apparent in practice that such long air bellows tend to fail sooner than the shorter (standard) air bellows. Failure of an air bellows, or of the pressure circuit of which the air bellows forms part, during normal transport may have catastrophic consequences if the position of the vehicle becomes so low as a result of said failure that the cargo of the vehicle will come into contact with the ground.

To obviate this risk, it is known to use mechanical safety systems, in which pawls must be manually operated in the wheel housings. Operating such a mechanical safety device is an unpleasant activity and it has become apparent in practice that, whether or not for that reason, this mechanical safety system is not always used.

To enable the relatively great stroke length that is required for picking up cargo from the ground, it is also known to use a fully hydraulic spring system. Apart from the fact that this is a comparatively costly solution, there is furthermore the risk of the cargo of the vehicle coming into contact with the ground during normal transport, with all its consequences, in the unhoped-for event of the hydraulic pressure falling out.

WO-A1-03/051656 describes a vehicle provided with an anti-heeling device, wherein use is made of combinations of a pneumatic spring bellows and a hydraulic cylinder, which are arranged in series between a chassis plate and wheel axles. To inhibit heeling of the vehicle, for example in bends, cylinders are actuated by control means on one long side of the vehicle. The control means are intended to adjust the length of the cylinders during transport as soon as heeling is about to take place.

GB-A-2,346,592 describes a control system for adjusting the ground clearance of a vehicle.

The object of the present invention is to provide a solution to the above-described problems. More specifically it is an object of the invention to provide a solution that is constructionally simple and which can thus be realised at relatively low cost. In order to accomplish that object, the control means of the vehicle according to the invention are arranged for setting the length of the safety device to its maximum value once the speed of the vehicle exceeds a threshold value. Such a threshold value may be 5 km per hour, for example. This prevents a situation in which the driver of the vehicle forgets to set the safety device to its maximum length by operating the control means at the start of normal transport, after cargo has been picked up; instead, this is done automatically on the basis of the vehicle's speed. The use of such a safety device makes it possible to use standard spring means, with the safety device only needing to assume its minimal length during the loading or unloading of cargo. During normal transport, on the other hand, the safety device will assume its maximum length, so that the cargo cannot come into contact with the ground, not even in the case of failure of the spring means, when the spring means assume their minimum length, because the safety device behaves as a rigid element.

>

A very practical embodiment of the safety device is obtained if the safety device comprises a pressure element provided with a pressure chamber, wherein the length of the pressure element changes under the influence of a changing pressure in the pressure chamber. Said changing of the pressure will in turn be induced by the control means.

For safety reasons it is greatly preferable if the pressure element is connected to a pressure circuit other than that to which the spring means are connected. In this way it is ensured with even greater certainty that a pressure failure in a pressure circuit will not lead to a situation in which the cargo of the vehicle will come into contact with the ground during normal transport.

Precisely because of the fact that hydraulic media, such as oil, are hardly compressible, if at all, it is preferable if the safety device is a hydraulic safety device, as a result of which the safety device can exhibit a very great stiffness in its longitudinal direction also in the situation in which it has assumed its maximum length. Said stiffness is very important with a view to ensuring that the safety device will retain its maximum length also in unexpected conditions, when relatively large forces are exerted on the safety device.

For reasons of constructional simplicity, it is highly preferable if the safety device comprises a piston-cylinder combination that comprises the pressure chamber. Such piston-cylinder combinations are commercially available as standard.

For constructional reasons it is preferable if the piston of the piston-cylinder combination is rigidly connected either to the suspension element or to the chassis, preferably to the suspension element. Thus, the installation space for the safety device can remain limited, in particular if the spring means comprise a pneumatic spring bellows and use is made of a connecting element according to preferred embodiments of the invention yet to be described hereinafter.

To prevent the use of flexible hoses, which move upon compression and extension of the spring means and/or movement of the safety device between its minimum length and its maximum length, the piston preferably has an internal pressure channel that is in communication with the pressure chamber.

The present invention offers major advantages in particular as regards the cost price of the parts related to the invention if the spring means are of the pneumatic type and, furthermore preferably, comprise a pneumatic spring bellows.

A very compact construction can be obtained if the safety device is connected to a movable wall portion of the spring bellows for joint movement of the movable wall portion and the safety device upon compression and extension of the spring bellows. In that case the safety can move into the spring bellows, as it were, upon compression of the vehicle's suspension.

An efficient deformation of the spring bellows during compression and extension thereof is obtained if the safety element is connected to the movable wall portion via a connecting element whose diameter ranges between 45% and 85% of the diameter of the spring bellows. If the connecting element would have a larger diameter, it would be necessary to effect such a large deformation of the spring bellows that this would lead to premature failure thereof. In the case of a smaller diameter of the connecting element, on the other hand, movement of the safety device in the direction of the spring bellows would only effect a limited change in the volume of the interior of the spring bellows, so that only a limited spring action would be obtained. The connecting element thus functions more or less as a piston for the spring bellows.

Again in order to realise a compact construction of the spring means and the safety device, it is furthermore preferable if the connecting element is at least partially ring-shaped or cylinder-shaped and surrounds the respective part of the safety device at least partially. In this way the total length of the series-connected spring means and safety device, and thus the required installation space thereof, is limited.

The present invention further relates to a combination of spring means and a safety device whose length is adjustable between a minimum length and a maximum length by control means, wherein said spring means and said safety device are connected in series for use in a vehicle. The advantages of the use of such a combination have already been extensively described in the above description of the vehicle according to the present invention.

The present invention will be explained in more detail below by means of a description of a vehicle according to the present invention, in which reference is made to the following figures:
Figure 1 shows a first embodiment of a vehicle according to the invention;
Figure 2 shows a second embodiment of a vehicle according to the invention;
Figures 3-6 show the wheel suspension of one of the wheels of the vehicle of figure 2 in the neutral position thereof during normal transport, in the loading/unloading position, in their maximally compressed position during normal transport and in the maximally extended position during normal transport, respectively;
Figure 7 is a longitudinal sectional view of the combination of a pneumatic spring bellows and a hydraulic cylinder according to the invention as used for each of the wheels of the vehicle of figure 2;
Figure 8 is a perspective view of the combination of figure 7;
Figure 9 is a perspective view of the hydraulic cylinder that forms part of the combination that is shown in figures 7 and 8;
Figure 10 is a cross-sectional view of the hydraulic cylinder of figure 9;
Figure 11 is a partial cross-sectional view of the hydraulic cylinder of figure 9 along the line XI-XI in figure 10; and
Figures 12-15 are rear views of the vehicle of figure 2 in situations corresponding to the situations that are shown in figures 3-6.

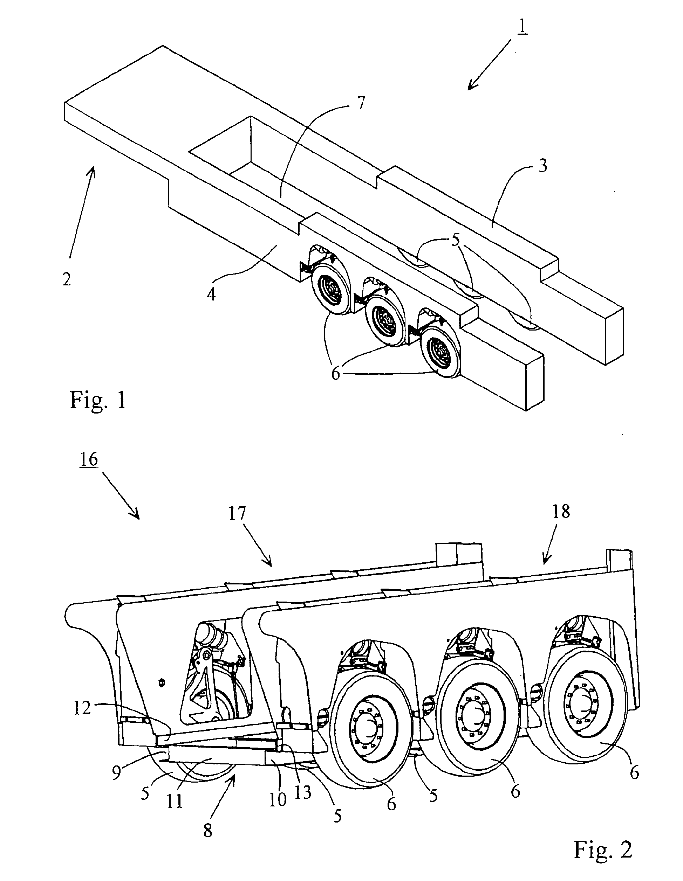

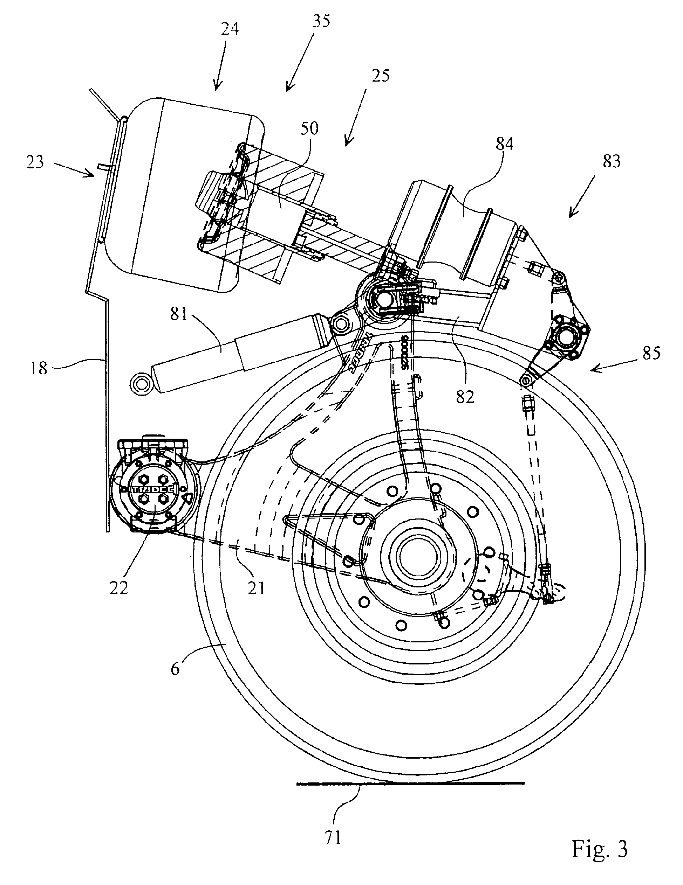

Figure 1 shows a first embodiment of a vehicle according to the present invention. The vehicle is a so-called "inner loader" 1, which can be hitched to a tractive vehicle (not shown) at the front side 2 in a manner that is known per se. Seen in top plan view, the inner loader is substantially U-shaped, with rearwardly extending legs 3, 4. Three wheels 5, 6 arranged one behind another are mounted in each of the legs 3, 4, within the width thereof, each wheel being provided with its own wheel suspension, which will be described in more detail yet in particular with reference to figures 3-6. A space 7 for receiving cargo is present between the legs 3, 4. Such cargo may for example be formed by a steel pallet 8 (also refer to figure 2 and figures 12-15), which is provided on opposite longitudinal sides thereof with horizontal, U-shaped sections 9, 10, whose open sides extend outwardly in directions away from each other. Cross beams 11 extend in evenly spaced-apart relationship between the U-shaped sections 9, 10, which cross beams are connected to the U-shaped sections 9, 10 at their respective ends. On the pallet 8 that is thus configured, the actual cargo (not shown) is present, which cargo may be formed by vertical panels, example of glass or concrete, which may be supported at their upper ends against a partition (not shown), which extends in the longitudinal direction of the inner loader and which is fixed to the pallet 8.

To receive the pallet 8 and its cargo, the inner loader 1 is provided with angle sections at the inner side and the underside of the legs 3, 4. Similar angle sections are provided for the vehicle according to figures 2 and further, which angle sections are indicated at 12, 13. The horizontal legs 14, 15 of the angle sections 12, 30 are capable of picking up the pallet 8 with its actual cargo in a manner yet to be described in more detail hereinafter. Only the legs 17, 18 at the rear side of the inner loader 16 are shown in figure 2.

Said legs 17, 18 are interconnected at the front side of the inner loader 16 by means of an inner loader part (not shown) that essentially corresponds to the front half of the inner loader 1 that is shown in figure 1. The inner loader 16 likewise comprises three wheels 5, 6 arranged one behind another for each leg 17, 18, each wheel being provided with its own wheel suspension. The wheel suspensions of the inner loaders 1 and 16 are identical to each other.

The wheel suspension as well as operation thereof will now be discussed in more detail with reference to figures 3-6. The wheel suspension for each of the wheels 5, 6 comprises a triangle arm 21, which is illustrated in dotted lines in figure 3 insofar as it is hidden from view by the wheel 6. The triangle arm 21 is connected to the chassis of the inner loader 16 via a suspension bearing 22, being capable of limited pivoting movement about a pivot axis perpendicular to the plane of drawing. The pivot axis coincides with the central axis of the suspension bearing 22, which is provided with an internal rubber bearing bushing. The suspension bearing 22 is rigidly connected to the chassis of the inner loader 16 in a manner that is not shown.

The wheel 6 is rotatably mounted to the triangle arm 21 at the location of the lower (seen in figure 3) corner point of the triangle arm 21.

A shock absorber 81 is provided between the upper corner point of the triangle arm 21 and the chassis of the inner loader 16 for damping the spring movements of the wheel suspension. The shock absorber 81 is pivotally connected to the triangle arm 21 at one end and to the chassis at the other end. In addition to that, brake means 83 for the wheel 6 comprising a pneumatic brake cylinder 84 and a linkage 85 are connected, via an arm 82, to the triangle arm 21 in the upper corner point thereof. For a detailed description of said brake means reference may be had to EP-A2-1 333 189.

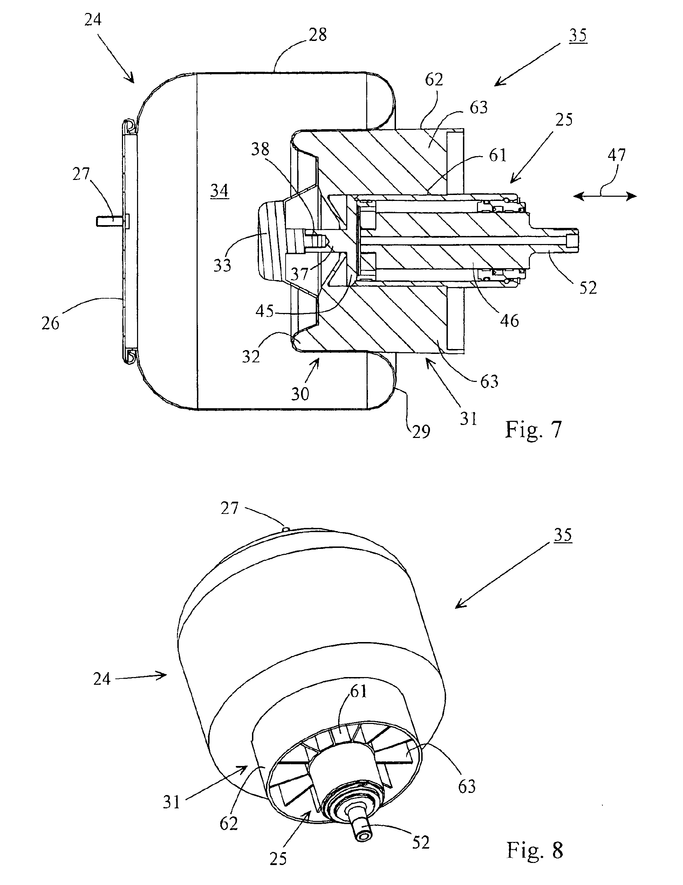

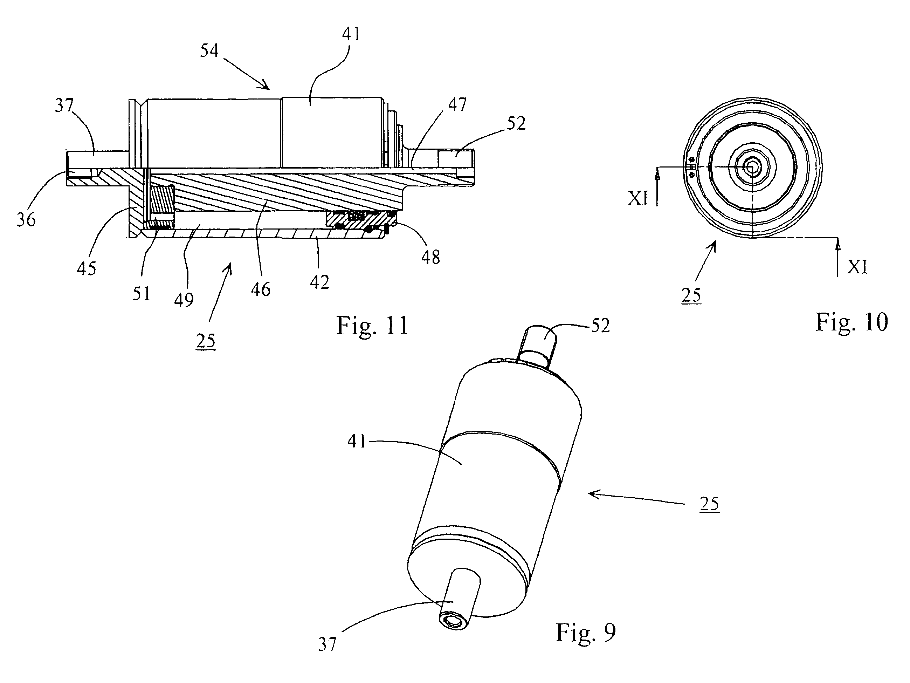

The wheel suspension as described so far with reference to figure 3 forms the prior art. The difference with the prior art is embodied in the use of a combination 35 of a bellows 24 and a cylinder 25 that are connected in series, as will be discussed hereinafter. Said combination 35 is provided between the upper corner point of the triangle arm 21 and the chassis of the inner loader 16, at the location indicated at 23. Said combination 35 is shown in more detail in figures 7 and 8, whilst figures 9-11 show the hydraulic cylinder of the combination in even greater detail.

At its end remote from the hydraulic cylinder 25, the spring bellows 24 is provided with a disc-shaped steel bellows plate 26. A bolt 27 extends through a central hole in the bellows plate 26, by means of which bolt the spring bellows 24 is fixed to the chassis of the inner loader 16. The spring bellows 24 further comprises a cylindrical bellows wall 28 of a rubber or at least rubber-like material, which joins the circumference of the bellows plate 26. The bellows wall 28 comprises an inwardly folded 180° bend 29. Beyond said 180° bend, at the location indicated at 30, the bellows wall 28 abuts against the outer side of a cylindrical connecting element 31, which has a rounded circumferential edge 32, about which the bellows wall 28 is folded. Beyond said circumferential wall 32, the bellows wall 28 comprises a second, central, inwardly extending stub 33. The diameter of the stub 33 decreases in two steps in the direction of the cylinder 25. The bellows wall 28 is connected to the cylinder 25 by means of a glued joint 38 at the location of the smallest diameter of the stub 33, where the stub 33 extends within a bore 36 in the connecting bar 37 of the cylinder 25. Alternative connecting techniques for effecting the connection between the bellows wall 28 and the cylinder 25 are possible within the framework of the present invention, for example vulcanising an external steel screw thread on the stub 33, which screw thread mates with an internal screw thread within the bore 36.

Together with the bellows plate 26, the bellows wall 28 defines an internal pneumatic pressure chamber 34. The pressure within the pressure chamber 34 can be set, for example automatically, by means of a height control valve as is generally known per se. The bellows 24 will have a specific spring characteristic that depends on the magnitude of the pressure.

The cylinder 25 comprises a cylindrical housing 41 (also refer to figures 9-11) having a cylinder wall 42, at the end of which remote from the bellows 24 a sealing, disc-shaped head plate 45 is provided, from where the aforesaid connecting part 37 extends concentrically in the direction of the bellows 24. A piston element 46 is movable within the cylindrical housing 41 in the directions indicated by the double arrow 47. At its end facing towards the spring bellows 24, the piston element 46 has an enlarged diameter, which abuts against the inner side of the cylinder wall 42 in a gastight manner. A pressure channel 47 extends through the piston element 46, concentrically with the central axis thereof. The piston element 46 further comprises a connecting part 52 at its end remote from the connecting part 37, via which the cylinder 25 is rigidly connected to the upper corner of the triangle arm 21.

At the end remote from the bellows 24, the cylinder wall 42 is provided with a sealing element 48, along which the piston element 46 can move, sealing the cylindrical space 49 between the outer side of the piston element 46 and the inner side of the cylinder wall 42 from the environment of the cylinder 25. The sealing element 48 also forms a stop for the larger-diameter part of the piston element 46 upon extension of the cylinder 25. The head plate 45, the cylinder wall 42, insofar as it extends on the side facing towards the bellows 24 of the thickened end of the piston element 46, and the piston element 46 define a pressure chamber 50, to which oil can be supplied under pressure via the pressure channel 47 by pump means (not shown) so as to obtain a maximum length, as is shown in figures 3, 5 and 6. In use, the cylinder 25 will assume this maximum length during normal transport. The pressure chamber 50 is connected to the cylindrical space 49 via a number of channels in the thickened end of the piston element 46, so that the pressure in the cylindrical space 49 will be of the same magnitude as the pressure in the pressure chamber 50, and the cylindrical space 49 will not form a pressure resistance to the reciprocating motion of the piston element 46 as indicated by the double arrow 47.

A cylindrical connecting element 31 comprising an inner tube 61, an outer tube 62 and radial partitions 63 therebetween is provided between the cylinder 25 on the one hand and the bellows 24 on the other hand. The inner side of the inner tube 61 of the connecting element 31 is a tight fit on the outer side of the cylinder wall 42. To obtain said tight fit, the outer side of the cylinder wall 42 on the left-hand side in figure 11 has been precisely machined, thereby forming a step 54. Said step 54 functions as a shoulder that retains the connecting element 31. If desired, a separate retaining ring may be used between the step 54 and the connecting element 31, which retaining ring is a tight fit on the cylinder wall 42. In such an embodiment, the step 54 is positioned further to the right by a distance that corresponds to the thickness of the retaining ring, as is shown in figure 10. The connecting element 31, which has an external diameter of about 65% of that of the bellows 24, forms a piston for the bellows 24, as it were, which can move into and out of the bellows upon compression and extension of the bellows 24, as is also illustrated in figures 2-5.

The operation of the vehicle, more specifically of the various wheel suspensions thereof, is as follows:

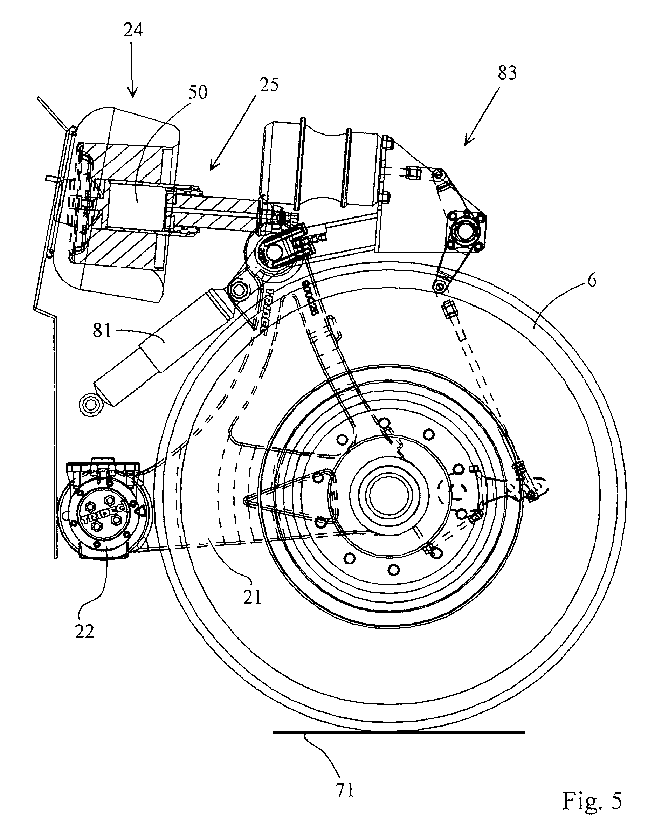

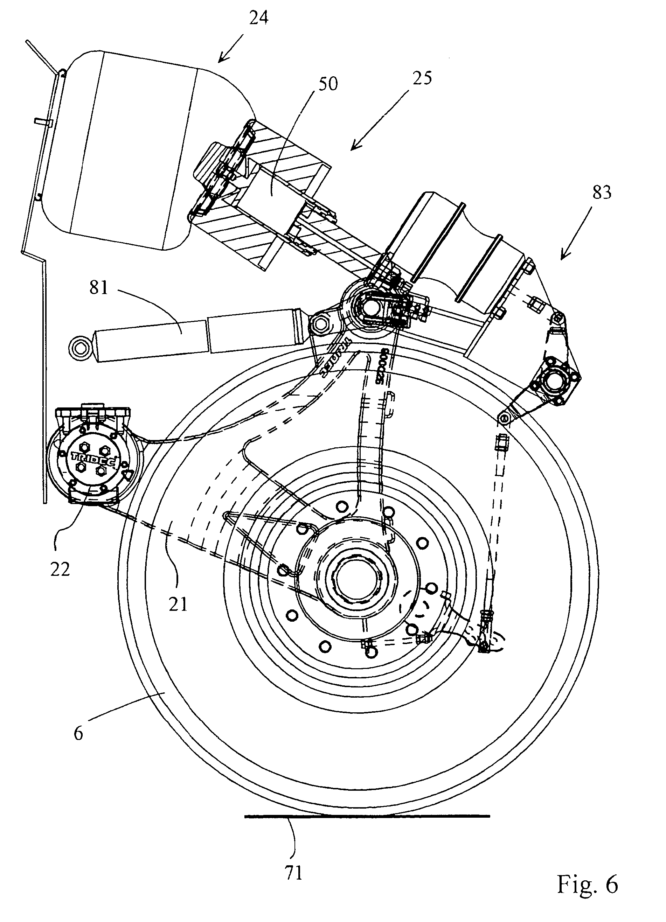

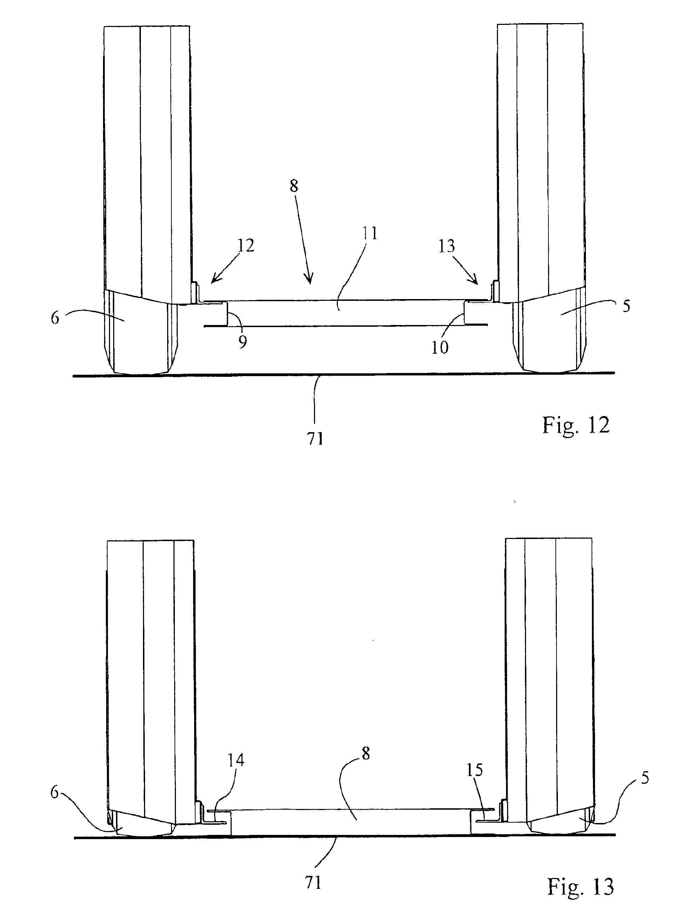

Figures 3 and 12 show the position of the wheel suspension during normal transport, in which the wheel suspension is neither compressed nor extended. Oil is present under an elevated pressure in the pressure chamber 50 of the hydraulic cylinder 25, as a result of which the hydraulic cylinder 25 has assumed its long maximum length. The hydraulic cylinder 25 and the connecting element 31 jointly behave as a rigid element in the neutral running position. Figures 5, 6, 14 and 15 show a maximally compressed position and a maximally extended position, respectively, of the wheel suspension, in which the connecting element 31 is positioned entirely within the bellows 24 (figure 5) or, on the contrary, entirely outside the bellows 24 (figure 6). It is important to note that the length of the hydraulic cylinder 25 is not at all affected by the compression or extension of the wheel suspension, more specifically of the bellows 24 thereof.

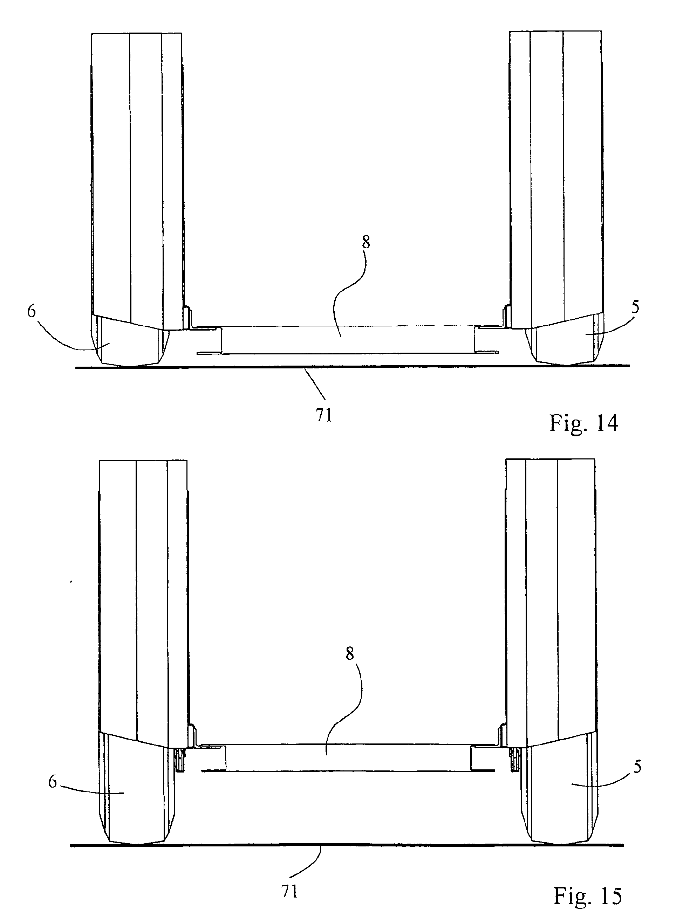

It is furthermore important to note that the pallet 8 will remain clear of the ground 71 in the maximally compressed situation, as is shown in figure 14, which shows a rear view of the inner loader 16 in the maximally compressed condition during normal transport. This is true not only in the maximally compressed situation, but also in the situation that, for whatever reason, the pneumatic pressure within the bellows 24 should fall out, for example due to unexpected and undesirable leak in the bellows wall 28. The cylinder 25 will retain its maximum length in such a situation, because the hydraulic circuit for the cylinder 25 functions independently of the pneumatic circuit for the bellows 24. If, on the other hand, the hydraulic pressure within the cylinder 25 should fall out unexpectedly, this can be registered directly, for example by pressure sensors (not shown) or by sensors that monitor or the length of the cylinder 25, which information can be forwarded to the driver of the inner loader 16, who can subsequently stop the vehicle in a safe manner. Only in the situation that a maximum compression of the wheel suspension should coincidentally take place at the time of an unhoped-for failure of the cylinder 25 would there be a chance of the pallet 8 coming into contact with the ground 71. It should be realised in this regard that maximum compression of the wheel suspensions will rarely occur in practice, so that the wheel suspension as described above can be characterised as quite safe.

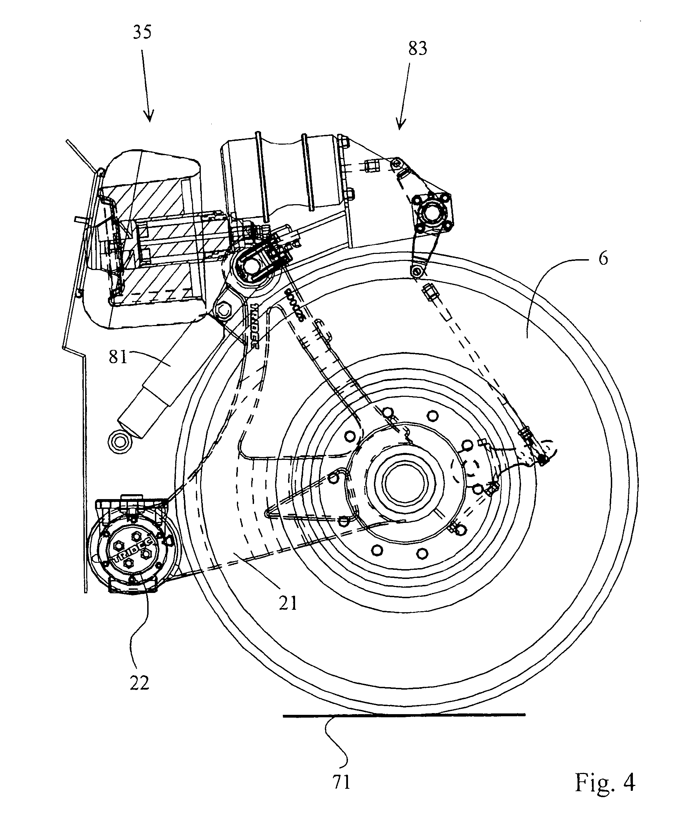

Figures 4 and 13, to conclude, relate to the situation during loading and unloading of the pallet 8. Only in this situation will the cylinder 25 assume its minimum length on account of the fact that the pressure within the pressure chamber 50 is reduced. In addition to that, the pressure within the pressure chamber 34 of the bellows 24 is reduced as well, so that the bellows 24, too, will compress maximally and thus assume its minimum length, just like the situation that is shown in figures 5 and 14. Precisely because the cylinder 25 has now assumed its minimum length, the inner loader 16 will lower itself even further than in the maximally compressed situation that is shown in figures 5 and 14, and that to a level such that the horizontal legs 14, 15 of the angular sections 12, 13 that face towards each other will be positioned between the level of the horizontal legs of each of the U-shaped sections 9, 10 of the pallet 8.

To pick up a pallet 8 that is present on the ground 71, the inner loader 16, with the wheel suspensions set to the position that is shown in figure 4, reverses in the direction of the pallet 8, parallel to the longitudinal direction of the U-shaped sections 9, 10, in such a manner that the horizontal legs 14, 15 will be positioned between the horizontal legs of each of the U-shaped sections 9, 10. Subsequently, pressure is admitted into the bellows 24 as well as into the cylinder 25, so that the upper sides of the horizontal legs 14, 15 will engage the undersides of the upper horizontal legs of the U-shaped sections 9, 10, resulting in the pallet 8 being picked up. The pressure within the bellows 24 and the cylinder 25 is further increased until the situation that is shown in figures 3 and 12 is reached and the inner loader 16 is ready for normal transport.

To prevent a situation in which the driver forgets to increase the pressure within the hydraulic cylinder 25 so as to have it assume a maximum length, it is furthermore advantageous if the inner loader 16 is provided with speed sensors and if control means are provided which automatically effect a pressure increase in the cylinder 25 so as to extend the cylinder 25 to its maximum length when a predetermined speed, for example of 5 or 10 km per hour, is exceeded.

As will be apparent to those skilled in the art, unloading of the pallet 8 onto the ground 71 will take place in a reverse manner, wherein the pressure in the cylinder 25 as well as in the bellows 24 is reduced once the destination has been reached, resulting in the situation that is shown in figures 4 and 13, in which the pallet 8 is supported on the ground 71 and the inner loader 16 subsequently drives forward, leaving the pallet 8 behind.

## Claims

1. A vehicle (1,16) comprising a chassis and a wheel suspension, said wheel suspension comprising spring means (24) that act between the chassis (23) and a suspension element (21) of the wheel suspension, on which suspension element at least one wheel (6) of the vehicle is rotatably mounted and which suspension element is movable relative to the chassis under the influence of the action of the spring means, wherein a safety device (25) is provided whose length can be adjusted between a minimum length and a maximum length by control means, which safety device is connected in series with the spring means between the suspension element and the chassis, wherein the safety device behaves as a rigid element in its maximum length position,
**characterised in that** the control means are arranged for setting the length of the safety device to its maximum value once the speed of the vehicle exceeds a threshold value.

2. A vehicle according to claim 1 , **characterised in that** the safety device comprises a pressure element (25) provided with a pressure chamber (50), wherein the length of the pressure element changes under the influence of a changing pressure in the pressure chamber.

3. A vehicle according to claim 2, **characterised in that** the pressure element is connected to a pressure circuit other than that to which the spring means are connected.

4. A vehicle according to claim 3, **characterised in that** the pressure circuit to which the pressure element is connected is of a different type than the pressure circuit to which the spring means are connected.

5. A vehicle according to any one of the preceding claims, **characterised in that** the safety device is a hydraulic safety device.

6. A vehicle according to any one of the claims 2-5 **characterised in that** the safety device comprises a piston-cylinder combination (25) that comprises the pressure chamber.

7. A vehicle according to claim 6, **characterised in that** the piston (46) of the piston-cylinder combination is rigidly connected either to the suspension element or to the chassis, preferably to the suspension element.

8. A vehicle according to claim 6 or 7, **characterised in that** the piston has an internal pressure channel (47) that is in communication with the pressure chamber.

9. A vehicle according to any one of the preceding claims, **characterised in that** the spring means are of the pneumatic type.

10. A vehicle according to claim 9, **characterised in that** the spring means comprise a pneumatic spring bellows (24).

11. A vehicle according to claim 10, **characterised in that** the safety device is connected to a movable wall portion of the spring bellows for joint movement of the movable wall portion and the safety device upon compression and extension of the spring bellows.

12. A vehicle according to claim 11, **characterised in that** the safety element is connected to the movable wall portion via a connecting element (31) whose diameter ranges between 45% and 85% of the diameter of the spring bellows.

13. A vehicle according to claim 12, **characterised in that** the connecting element is at least partially ring-shaped or cylinder-shaped and surrounds the respective part of the safety device at least partially.

14. A combination (35) of spring means and a safety device whose length is adjustable between a minimum length and a maximum length by control means, wherein said spring means and said safety device are connected in series for use in the wheel suspension of a vehicle according to any one of the preceding claims.

## Patentansprüche

1. Fahrzeug (1, 16), mit einem Fahrgestell und einer Radaufhängung, wobei die Radaufhängung Federmittel (24) aufweist, die zwischen dem Fahrgestell (23) und einem Aufhängungselement (21) der Radaufhängung wirken, wobei wenigstens ein Rad (6) des Fahrzeugs an dem Aufhängungselement drehbar angebracht ist und das Aufhängungselement unter Einfluss der Wirkung des Federmittels relativ zum Fahrgestell bewegbar ist, wobei eine Sicherheitseinrichtung (25) vorgesehen ist, deren Länge zwischen einer Minimallänge und einer Maximallänge durch Steuermittel eingestellt werden kann, wobei die Sicherheitseinrichtung mit den Federmitteln zwischen dem Aufhängungselement und dem Fahrgestell seriell verbunden ist, wobei sich die Sicherheitseinrichtung in ihrer Maximallängenposition wie ein starres Element verhält, **dadurch gekennzeichnet, dass** die Steuermittel derart ausgebildet sind, dass sie die Länge der Sicherheitseinrichtung auf den Maximalwert einstellen, sobald die Fahrzeuggeschwindigkeit einen Schwellwert überschreitet.

2. Fahrzeug nach Anspruch 1, **dadurch gekennzeichnet, dass** die Sicherheitseinrichtung ein Druckelement (25) aufweist, das mit einer Druckkammer (50) versehen ist, wobei sich die Länge des Druckelements unter dem Einfluss eines sich ändernden Drucks in der Druckkammer ändert.

3. Fahrzeug nach Anspruch 2, **dadurch gekennzeichnet, dass** das Druckelement mit einem anderen Druckkreislauf verbunden ist als demjenigen, mit dem die Federmittel verbunden sind.

4. Fahrzeug nach Anspruch 3, **dadurch gekennzeichnet, dass** der Druckkreislauf, mit dem das Druckelement verbunden ist, von anderer Art ist als der Druckkreislauf, mit dem die Federmittel verbunden sind.

5. Fahrzeug nach einem der vorhergehenden Ansprüche, **dadurch gekennzeichnet, dass** die Sicherheitseinrichtung eine hydraulische Sicherheitseinrichtung ist.

6. Fahrzeug nach einem der Ansprüche 2 bis 5, **dadurch gekennzeichnet, dass** die Sicherheitseinrichtung eine Kolben-Zylinder-Kombination (25) aufweist, die die Druckkammer aufweist.

7. Fahrzeug nach Anspruch 6, **dadurch gekennzeichnet, dass** der Kolben (46) der Kolben-Zylinder-Kombination entweder mit dem Aufhängungselement oder mit dem Fahrgestell fest verbunden ist, vorzugsweise mit dem Aufhängungselement.

8. Fahrzeug nach Anspruch 6 oder 7, **dadurch gekennzeichnet, dass** der Kolben einen inneren Druckkanal (47) hat, der in Verbindung mit der Druckkammer steht.

9. Fahrzeug nach einem der vorhergehenden Ansprüche, **dadurch gekennzeichnet, dass** die Federmittel pneumatisch sind.

10. Fahrzeug nach Anspruch 9, **dadurch gekennzeichnet, dass** die Federmittel einen pneumatischen Federbalg (24) aufweisen.

11. Fahrzeug nach Anspruch 10, **dadurch gekennzeichnet, dass** die Sicherheitseinrichtung mit einem bewegbaren Wandabschnitt des Federbalgs zum gemeinsamen Bewegen des bewegbaren Wandabschnitts und der Sicherheitseinrichtung bei Kompression und Ausdehnung des Federbalgs verbunden ist.

12. Fahrzeug nach Anspruch 11, **dadurch gekennzeichnet, dass** das Sicherheitselement mit dem bewegbaren Wandabschnitt über ein Verbindungselement (31) verbunden ist, dessen Durchmesser zwischen 45% und 85% des Durchmessers des Federbalgs beträgt.

13. Fahrzeug nach Anspruch 12, **dadurch gekennzeichnet, dass** das Verbindungselement wenigstens teilweise ringförmig oder zylinderförmig ist und den entsprechenden Teil der Sicherheitseinrichtung zumindest teilweise umschließt.

14. Kombination (35) von Federmitteln und einer Sicherheitseinrichtung, deren Länge zwischen einer Minimallänge und einer Maximallänge durch Steuermittel einstellbar ist, wobei die Federmittel und die Sicherheitseinrichtung zur Verwendung in der Radaufhängung eines Fahrzeugs nach einem der vorhergehenden Ansprüche seriell verbunden sind.

## Revendications

1. Véhicule (1, 16) comprenant un châssis et une suspension de roue, ladite suspension de roue comprenant des moyens à ressort (24) qui agissent entre le châssis (23) et un élément de suspension (21) de la suspension de roue, sur lequel élément de suspension au moins une roue (6) du véhicule est montée de manière rotative et lequel élément de suspension est mobile par rapport au châssis sous l'effet des moyens à ressort, dans lequel un dispositif de sécurité (25) est prévu, dont la longueur peut être ajustée entre une longueur minimum et une longueur maximum par des moyens de commande, lequel dispositif de sécurité est relié en série aux moyens à ressort entre l'élément de suspension et le châssis, dans lequel le dispositif de sécurité se comporte comme un élément rigide dans sa position de longueur maximum, **caractérisé en ce que** les moyens de commande sont agencés pour le réglage de la longueur du dispositif de sécurité à sa valeur maximum une fois que la vitesse du véhicule excède une valeur seuil.

2. Véhicule selon la revendication 1, **caractérisé en ce que** le dispositif de sécurité comprend un élément de pression (25) doté d'une chambre de pression (50), dans lequel la longueur de l'élément de pression change sous l'influence d'une pression variable dans la chambre de pression.

3. Véhicule selon la revendication 2, **caractérisé en ce que** l'élément de pression est relié à un circuit de pression autre que celui auquel les moyens à ressort sont reliés.

4. Véhicule selon la revendication 3, **caractérisé en ce que** le circuit de pression auquel l'élément de pression est relié, est d'un type différent de celui du circuit de pression, auquel les moyens à ressort sont reliés.

5. Véhicule selon l'une quelconque des revendications précédentes, **caractérisé en ce que** le dispositif de sécurité est un dispositif de sécurité hydraulique.

6. Véhicule selon l'une quelconque des revendications 2 à 5, **caractérisé en ce que** le dispositif de sécurité comprend une combinaison à piston et cylindre (25) comprenant la chambre de pression.

7. Véhicule selon la revendication 6, **caractérisé en ce que** le piston (46) de la combinaison à piston et cylindre est rigidement relié à l'élément de suspension ou au châssis, de préférence à l'élément de suspension.

8. Véhicule selon la revendication 6 ou 7, **caractérisé en ce que** le piston présente un canal de pression interne (47) qui est en communication avec la chambre de pression.

9. Véhicule selon l'une quelconque des revendications précédentes, **caractérisé en ce que** les moyens à ressort sont de type pneumatique.

10. Véhicule selon la revendication 9, **caractérisé en ce que** les moyens à ressort comprennent un soufflet de ressort pneumatique (24).

11. Véhicule selon la revendication 10, **caractérisé en ce que** le dispositif de sécurité est relié à une partie de paroi mobile du soufflet de ressort pour le mouvement commun de la partie de paroi mobile et le dispositif de sécurité suite à la compression et l'extension du soufflet de ressort.

12. Véhicule selon la revendication 11, **caractérisé en ce que** l'élément de sécurité est relié à la partie de paroi mobile via un élément de liaison (31), dont le diamètre est compris entre 45 et 85 % du diamètre du soufflet de ressort.

13. Véhicule selon la revendication 12, **caractérisé en ce que** l'élément de liaison est au moins partiellement de forme annulaire ou cylindrique et entoure au moins partiellement la partie respective du dispositif de sécurité.

14. Combinaison (35) de moyens à ressort et d'un dispositif de sécurité, dont la longueur est ajustable entre une longueur minimum et une longueur maximum par des moyens de commande, dans laquelle lesdits moyens à ressort et ledit dispositif de sécurité sont reliés en série pour une utilisation dans la suspension de roue d'un véhicule selon l'une quelconque des revendications précédentes.
